Europäisches Patentamt

European Patent Office

Office européen des brevets

(11) Numéro de publication: **0 508 921 A1**

# (12) DEMANDE DE BREVET EUROPEEN

(21) Numéro de dépôt: **92440043.5**

(22) Date de dépôt: **09.04.92**

(51) Int. Cl.5: **B23Q  1/16**

(30) Priorité: **09.04.91 FR 9104470**

(43) Date de publication de la demande:
**14.10.92 Bulletin   92/42**

(84) Etats contractants désignés:
**AT CH DE FR GB IT LI**

(71) Demandeur: **MIKRON S.A. MULHOUSE**
**15, rue de Ouimper**
**F-68200 Mulhouse(FR)**

(72) Inventeur: **Buessinger, Pierre**
**44a rue du Maréchal Joffre**
**F-68290 Wintzenheim(FR)**
Inventeur: **Leveque, Yves**
**15 rue Henriette**
**F-68100 Mulhouse(FR)**

(74) Mandataire: **Nithardt, Roland**
**CABINET NITHARDT & BURKARD 12 rue du**
**17 Novembre Boite Postale 1445**
**F-68071 Mulhouse Cédex(FR)**

(54) Dispositif de transfert de plateaux satellites.

(57)  L'invention concerne un dispositif de transfert de plateaux satellites porte-pièces pour une machine d'usinage et/ou d'assemblage automatique. Le dispositif comporte une table de transfert (11) portant au moins deux plateaux satellites (12) associés à des plateaux diviseurs (24) pour les déplacer angulairement autour de leur axe central, afin de les mettre et les maintenir dans des positions indexées par rapport au bâti (10). La table de transfert (11) est mobile selon un axe vertical (D) entre une position basse et une position haute et rotative autour de cet axe. Les plateaux satellites (12) sont portés par cette table de transfert lorsqu'elle se trouve dans sa position haute et par des plateaux diviseurs (24) lorsqu'elle se trouve dans sa position basse. Il est prévu un accouplement positif (24a, 24b) entre chaque plateau satellite et le plateau diviseur associé.

FIG.1

La présente invention concerne un dispositif de transfert à plateaux satellites porte-pièces dans une machine d'usinage et/ou d'assemblage automatique, comportant un bâti, une table de transfert montée sur le bâti de manière rotative autour d'un axe vertical de la table, au moins deux plateaux satellites montés de manière rotative sur la table de transfert à des emplacements régulièrement espacés sur un cercle centré sur l'axe de la table, et des moyens de positionnement associés respectivement à chaque plateau satellite et agencés pour placer ledit plateau dans des positions angulaires indexées.

Les dispositifs de transfert connus de ce type comportent habituellement une table de transfert mobile en rotation autour d'un axe central et portant un certain nombre de plateaux diviseurs comportant chacun un plateau porte-pièces, appelé plateau satellite. Le terme de plateau diviseur désigne un organe bien connu comprenant un plateau capable de tourner autour de son axe et un moyen de positionnement agencé pour mettre ce plateau, par une commande pas-à-pas, dans des positions angulaires indexées. Les ensembles constitués par les plateaux diviseurs et les plateaux satellites sont embarqués sur la table de transfert. De ce fait, cette table de transfert doit être de construction robuste pour pouvoir supporter les charges importantes qu'elle est amenée à transporter. Il en résulte une construction lourde et massive ayant une inertie importante. Les moyens d'entraînement de cette table de transfert doivent également être étudiés en conséquence pour permettre de vaincre son inertie lors de sa mise en mouvement, pour permettre les accélérations requises à son déplacement angulairement et amener les plateaux porte-pièces dans les positions souhaitées. Cette réalisation massive présente de multiples inconvénients et en particulier son coût, qui résulte directement des contraintes imposées pour les motifs indiqués ci-dessus.

Les publications **FR-A-2 141 954** et **DE-B-1 270 929** décrivent des dispositifs où des plateaux satellites sont portés par un support central pivotant et mobile en translation verticale, qui peut les déplacer et les poser sur des supports fixes pourvus d'organes d'indexage tels que des dents. Toutefois cela implique que les plateaux ne peuvent tourner autour de leur propre axe que pendant que le support central les porte, c'est-à-dire que ce support doit aussi porter les moyens de positionnement des plateaux.

L'abrégé japonais publié dans **JP Patent Abstracts Vol 6, N° 207 (M-165) -1085-** décrit une table pivotante pour machine-outil, comportant une série de mandrins rotatifs porte-pièces destinés à imposer un mouvement de rotation aux pièces, par exemple pour le tournage. A chaque poste d'usinage, le mandrin est abaissé par une translation de la table pour qu'il s'accouple à un entraînement motorisé lui imposant ledit mouvement de rotation. Un tel dispositif n'est pas du tout agencé pour mettre le mandrin dans une position augulaire indexée.

La présente invention se propose de pallier les inconvénients ci-dessus mentionnés des dispositifs du type décrit plus haut, en réalisant un dispositif de transfert dont la partie tournante est beaucoup plus légère.

Ce but est atteint par le dispositif de transfert selon l'invention caractérisé en ce que la table de transfert est mobile en translation verticale par rapport au bâti au moyen d'un mécanisme de levage et d'abaissement, en ce que le moyen de positionnement associé à chaque plateau comprend un moyen d'entraînement rotatif pas-à-pas, monté de manière fixe sur le bâti, et un moyen d'accouplement positif entre le plateau satellite et le moyen d'entraînement, en ce que, dans une position haute de la table de transfert, les plateaux satellites sont supportés par ladite table et sont désaccouplés desdits moyens d'entraînement et en ce que, dans une position basse de la table de transfert, les plateaux satellites sont supportés par les moyens de positionnement et sont liés à ceux-ci par les moyens d'accouplement.

Les moyens d'accouplement peuvent comporter avantageusement une première couronne dentée solidaire d'un plateau satellite et une seconde couronne dentée solidaire du moyen d'entraînement associé à ce plateau.

De préférence, la table de transfert comporte des ouvertures agencées pour permettre le passage desdits moyens d'accouplement.

Les ouvertures de la table de transfert ont avantageusement un diamètre compris entre celui des couronnes dentées des moyens d'accouplement et celui des plateaux satellites.

Dans une forme de réalisation préférée, le mécanisme de levage et d'abaissement comporte un vérin hydraulique ou pneumatique. Ce vérin est de préférence du type rotatif et actionne une manivelle couplée à un arbre central portant ladite table.

La table de transfert comporte avantageusement des organes d'indexage associés à chaque plateau satellite.

De préférence, chaque plateau satellite est associé à un joint à lèvre circulaire solidaire de la table de transfert.

Dans une forme de réalisation particulière, le dispositif de transfert comporte des moyens pour verrouiller l'accouplement des plateaux satellites et des moyens d'entraînement associés.

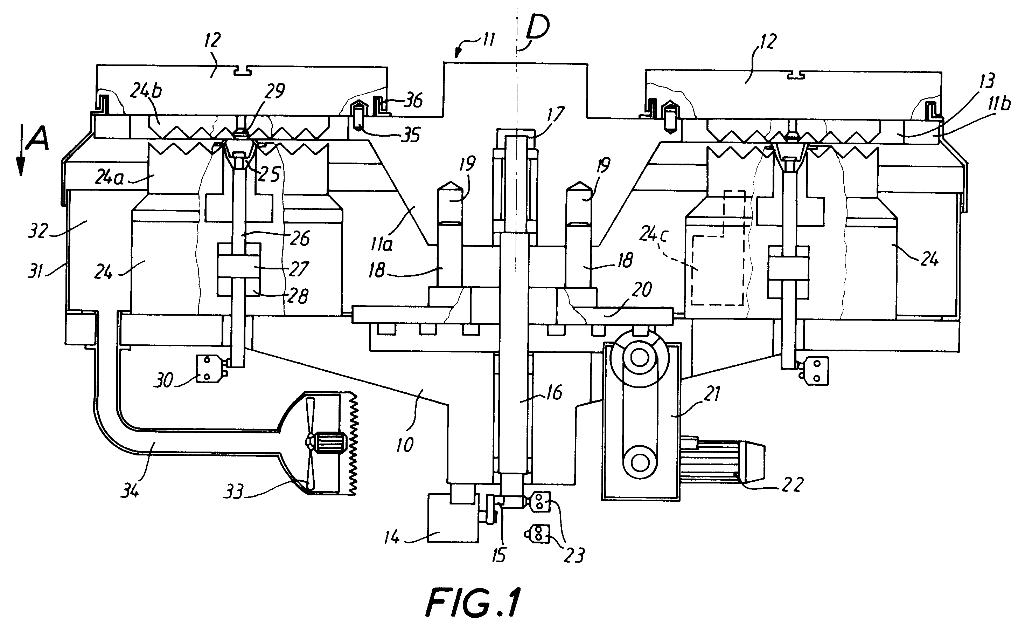

La présente invention sera mieux comprise en référence à la description d'un exemple de réalisation et du dessin annexé, dont la figure unique représente une vue en coupe transversale verticale du dispositif de transfert à plateaux satellites selon l'invention.

En référence à la figure, le dispositif de transfert représenté comporte un bâti 10 sur lequel est montée une table de transfert 11 portant au moins deux plateaux satellites porte-pièces 12 disposés avec des intervalles angulaires égaux le long d'un cercle centré sur l'axe D de la table. La table de transfert 11 se compose d'un bloc central 11a auquel est fixée une plaque 11b en forme de disque, coaxiale au bloc central et pourvue d'ouvertures 13 ménagées partiellement sous les plateaux satellites 12.

La table de transfert 11 est agencée pour être déplacée entre une position haute (représentée par la figure) et une position basse, obtenue par déplacement vertical selon la flèche A. Ce déplacement est réalisé grâce à un vérin hydraulique ou pneumatique 14, qui, dans le présent cas est constitué par un vérin rotatif actionnant une manivelle 15 à laquelle est attaché un arbre central 16 dont l'extrémité supérieure est logée dans une alvéole 17 réalisée dans le bloc central 11a. Des colonnes de guidage 18 sont engagées dans deux alésages 19 également ménagés dans le bloc central 11a. Ces deux colonnes de guidage 18 sont portées par un plateau rotatif 20 qui est couplé, par l'intermédiaire d'une boîte de transmission 21, à un moteur d'entraînement 22. Ce moteur d'entraînement 22 et la boîte de transmission 21 assurent le déplacement en rotation de la table de transfert 11 autour de l'axe vertical D, qui est en fait son axe de symétrie. Deux détecteurs de fin de course 23 coopèrent avec l'arbre central 16 pour fournir des informations correspondant respectivement à la position basse et la position haute de la table de transfert.

Le bâti 10 porte au moins deux plateaux diviseurs 24 qui constituent les moyens de positionnement associés aux plateaux satellites 12. Le nombre de plateaux diviseurs est égal au nombre de plateaux satellites. Chaque plateau diviseur comporte un élément d'accouplement 24a agencé pour coopérer avec un élément d'accouplement complémentaire 24b solidaire du plateau satellite correspondant. Dans le présent cas, les éléments d'accouplement 24a et 24b sont constitués par deux couronnes dentées, les dents de l'une des couronnes étant destinées à s'engager entre les dents de l'autre couronne. La couronne d'accouplement 24a d'un plateau diviseur 24 peut pivoter autour de son axe vertical pour être mise dans des orientations angulaires indexées, d'une manière connue dans les plateaux diviseurs usuels, au moyen d'un entraînement de rotation à moteur pas-à-pas 24c, logé dans la partie fixe du plateau diviseur 24 et associé de préférence à un système de commande numérique de la machine équipée du dispositif selon l'invention. Un des plateaux diviseurs 24, par exemple celui qui correspond au poste de chargement déchargement de pièces sur les plateaux satellites 12, peut être fixe, c'est à dire ne comportant pas de mécanisme d'entraînement en rotation. Dans la position haute de la table de transfert, les éléments d'accouplement 24b des plateaux satellites sont dégagés des éléments d'accouplement 24a des plateaux diviseurs. En revanche, dans la position basse, ces éléments sont engagés les uns dans les autres de manière à assurer l'accouplement des plateaux diviseurs et des plateaux satellites et à supporter ces derniers.

En outre, des moyens de bridage sont prévus pour assurer le verrouillage de ces moyens d'accouplement lorsque la table de transfert est dans la position basse. Ces moyens de bridage comportent une pince 25 disposée à l'extrémité d'une tige 26 solidaire d'un piston 27 mobile à l'intérieur d'un cylindre 28, et destinée à serrer un élément protubérant 29 fixé à la base et au centre du plateau satellite 12 correspondant. Un détecteur de position 30 coopère avec l'autre extrémité de la tige 26 pour transmettre un signal correspondant à la position de la pince. Cette pince est ouverte lorsque la table de transfert se trouve en position haute et se ferme lorsque cette table de transfert se trouve en position basse, les plateaux diviseurs et les plateaux satellites étant accouplés.

Comme mentionné précédemment, les plateaux diviseurs 24 sont portés par le châssis 10 et sont fixes en position. La couronne d'accouplement 24a est mobile en rotation autour de son axe et permet, par le couplage avec la couronne dentée 24b du plateau satellite 12 correspondant d'assurer un déplacement angulaire de ce dernier dans une position prédéterminée. Dans le présent cas, ces plateaux diviseurs sont du type à denture. Ils peuvent également être à commande numérique. Les moyens d'accouplement pourraient être mécaniques, comportant par exemple une ou plusieurs goupilles, ou magnétiques, c'est-à-dire comportant un ou plusieurs électro-aimants. Pour déplacer chaque plateau satellite 12 d'une position à une autre, on libère ces plateaux en ouvrant les pinces 25, on amène la table de transfert dans la position haute, on engendre une rotation prédéterminée de cette table de transfert, on abaisse la table de transfert selon la flèche A, ce qui a pour effet d'amener un autre plateau satellite sur chaque plateau diviseur, et on referme la pince 25 pour assurer le verrouillage décrit ci-dessus. Les ouvertures 13 ménagées dans la table de transfert 11 ont un diamètre compris entre celui des couronnes dentées des moyens d'accouplement et celui des plateaux satellites. Ceci permet l'accouplement des couronnes dentées lorsque la table de transfert est en position basse et permet de porter les plateaux satellites 12 lorsque la table de transfert est en position haute.

Lorsque le nombre des plateaux satellites est de deux, la rotation de la table de transfert est de 180° à chaque cycle. Il est bien évident que la table de transfert peut comporter plus de deux plateaux satellites. Dans ce cas, à chaque cycle, l'angle de rotation de la table de transfert est égal à 360° divisé par le nombre de plateaux satellites.

Le bâti 10 est de préférence caréné au moyen d'un capot de protection 31 qui définit une enceinte sensiblement étanche 32 dans laquelle sont montés les plateaux diviseurs 24. Un dispositif de ventilation 33 connecté à cette enceinte au moyen d'un conduit 34 permet d'insuffler de l'air en surpression dans cet espace, ce qui a pour effet de diminuer ou de supprimer tout risque de pénétration de copeaux métalliques, de poussières ou d'huile de coupe vers les plateaux diviseurs, qui constituent des pièces mécaniques de haute précision nécessitant une protection. Cette circulation d'air permet aussi la ventilation du moteur de la table de transfert ainsi que celle des moteurs montés sur les plateaux diviseurs à commande numérique.

L'indexage des plateaux satellites par rapport à la table de transfert peut s'effectuer de différentes manières et notamment au moyen de goupilles 35 solidaires de la table de transfert et s'engageant dans des alvéoles appropriées ménagées à la base des plateaux satellites.

Les plateaux satellites 12 sont flottants sur la table de transfert 11 et retenus radialement par un joint à lèvre circulaire 36, qui assure l'étanchéité aux ouvertures 13. Un des avantages de ce système est que les plateaux satellites 12 peuvent être transférés sans aucune précision de positionnement au-dessus des plateaux diviseurs 24, donc avec un mécanisme d'une conception simple et économique. Les plateaux satellites 12 sont en effet positionnés et indexés de façon très précise après accouplement des deux couronnes dentées 24a et 24b des plateaux diviseurs 24, les défauts de positionnement lors du transfert des plateaux satellites 12 étant alors compensés par la déformation élastique des joints à lèvre circulaire 36. Ce positionnement indexé avec précision permet notamment d'utiliser le dispositif selon l'invention pour amener et maintenir des pièces dans des positions précises et stables en face d'unités d'usinage ou d'assemblage, notamment dans un centre d'usinage multiposte.

**Revendications**

1. Dispositif de transfert à plateaux satellites porte-pièces dans une machine d'usinage et/ou d'assemblage automatique, comportant un bâti, une table de transfert montée sur le bâti de manière rotative autour d'un axe vertical de la table, au moins deux plateaux satellites montés de manière rotative sur la table de transfert à des emplacements régulièrement espacés sur un cercle centré sur l'axe de la table, et des moyens de positionnement associés respectivement à chaque plateau satellite et agencés pour placer ledit plateau dans des positions angulaires indexées, caractérisé en ce que la table de transfert (11) est mobile en translation verticale par rapport au bâti (10) au moyen d'un mécanisme de levage et d'abaissement (14-20), en ce que le moyen de positionnement (24) associé à chaque plateau comprend un moyen d'entraînement rotatif pas-à-pas (24c), monté de manière fixe sur le bâti, et un moyen d'accouplement positif entre le plateau satellite (12) et le moyen d'entraînement (24c), en ce que, dans une position haute de la table de transfert (11), les plateaux satellites (12) sont supportés par ladite table et sont désaccouplés desdits moyens d'entraînement et en ce que, dans une position basse de la table de transfert (11), les plateaux satellites (12) sont supportés par les moyens de positionnement (24) et sont liés à ceux-ci par les moyens d'accouplement.

2. Dispositif selon la revendication 1, caractérisé en ce que lesdits moyens d'accouplement comportent chacun une première couronne dentée (24b) solidaire d'un plateau satellite (12) et une seconde couronne dentée (24a) solidaire du moyen d'entraînement (24) associé à ce plateau.

3. Dispositif selon la revendication 1 ou 2, caractérisé en ce que la table de transfert (11) comporte des ouvertures (13) agencées pour permettre le passage desdits moyens d'accouplement.

4. Dispositif selon la revendication 3, caractérisé en ce que les ouvertures (13) de la table de transfert (11) ont un diamètre compris entre celui des couronnes dentées (24a, 24b) des moyens d'accouplement et celui des plateaux satellites (12).

5. Dispositif selon l'une des revendications précédentes, caractérisé en ce que le mécanisme de levage et d'abaissement (14-20) comporte un vérin hydraulique ou pneumatique (14).

6. Dispositif selon la revendication 5, caractérisé en ce que ledit vérin (14) est du type rotatif et actionne une manivelle couplée à un arbre central (16) portant ladite table (11).

7. Dispositif selon l'une des revendications précédentes, caractérisé en ce que la table de transfert (11) comporte des organes d'indexage (35) coopérant avec chaque plateau satellite (12).

8. Dispositif selon l'une des revendications précédentes, caractérisé en ce que chaque plateau satellite (12) est associé à un joint à lèvre circulaire (36) solidaire de la table de transfert (11).

9. Dispositif selon l'une des revendications précédentes, caractérisé en ce qu'il comporte des moyens (25) pour verrouiller l'accouplement entre les satellites (12) et les moyens de po-tionnement (24) associés.

**FIG.1**

EP 0 508 921 A1

Office européen
des brevets

**RAPPORT DE RECHERCHE EUROPEENNE**

Numero de la demande

EP    92 44 0043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X<br>Y | JP-A-57 114 338 (HONDA)<br><br>* figures 1-4 *<br><br>--- | 1-3<br>5,9 | B23Q1/16 |
| Y | FR-A-2 141 954 (JAUCH)<br>* page 4, alinéa 2 *<br><br>--- | 5 | |
| Y | DE-B-1 270 929 (WITZIG)<br>* revendication 6; figure 5 *<br><br><br>----- | 9 | |
|  |  |  | **DOMAINES TECHNIQUES RECHERCHES (Int. Cl.5)**<br><br>B23Q |

Le présent rapport a été établi pour toutes les revendications

| Lieu de la recherche | Date d'achèvement de la recherche | Examinateur |
|---|---|---|
| LA HAYE | 24 JUILLET 1992 | DE GUSSEM J.L. |